# EUROPEAN PATENT SPECIFICATION

(11) **EP 4 484 516 B1**
(45) Date of publication and mention of the grant of the patent: **25.06.2025**
(21) Application number: 23181818.8
(22) Date of filing: 27.06.2023
(51) Int. Cl.: C09J 123/14, C08L 23/14, C08F 210/06

(54) **HOT MELT ADHESIVES BASED ON BLENDS COMPRISING NON-FUNCTIONALIZED AND FUNCTIONALIZED POLYOLEFINS**
SCHMELZHAFTKLEBER AUF BASIS VON BLENDS MIT NICHTFUNKTIONALISIERTEN UND FUNKTIONALISIERTEN POLYOLEFINEN
ADHÉSIFS THERMOFUSIBLES À BASE DE MÉLANGES COMPRENANT DES POLYOLÉFINES NON FONCTIONNALISÉES ET FONCTIONNALISÉES

(43) Date of publication of application: 01.01.2025
(73) Proprietor: SABIC Global Technologies B.V., 4612 PX Bergen op Zoom (NL)
(72) Inventor: JASINKA-WALC, Lidia, 6160 GA Geleen (NL); DUCHATEAU, Robbert, 6160 GA Geleen (NL); BOUYAHYI, Miloud, 6160 GA Geleen (NL); KRUSZYNSKI, Jakub, 6160 GA Geleen (DE); GAUTAM PANKAJ, Singh, 6160 GA Geleen (NL); NOWICKA, Weronika, 6160 GA Geleen (NL); SZOT, Wojciech, 6160 GA Geleen (NL)
(74) Representative: Sabic Intellectual Property Group

(56) References cited:
- WO-A1-2005/100501
- WO-A1-2022/238352

## Description

### TECHNICAL FIELD OF THE INVENTION

The present invention relates to hot melt adhesives blends comprising non-functionalized and functionalized polyolefins.

### TECHNOLOGICAL BACKGROUND OF THE INVENTION

Hot Melt Adhesive (HMA) also known as hot glue is a thermoplastic adhesive resin that is solid at ambient temperature and can be molten to apply it on a surface. Most commonly, HMAs comprise EVA or polyolefin elastomers. Other examples are thermoplastic polyurethanes (TPU), styrene block copolymers (SBC), polyamides or polyesters.

The HMAs are produced in several forms, such as sticks, pellets, beads, granulates, pastilles, chips, slugs, flyers, pillows, blocks, films or spray and are used in various applications like packaging, hygiene products, furniture, footwear, textile & leather, electronics, book binding and graphics, building & construction, consumer DIY.

HMA provide several advantages over solvent-based adhesives. Volatile organic compounds are reduced or eliminated and drying or curing steps, typically required for two component adhesives, are eliminated. Furthermore, HMA typically have high mileage, low odor and are thermally stable. HMA have long shelf life and usually can be disposed of without special precautions. Furthermore, being a thermoplast, an HMA bond can be simply reversed by heating the substrate. The obvious drawback of this reversible bonding is the loss of bonding strength at higher temperatures, up to complete melting of the adhesive. Hence, the use of HMA is limited to applications not exposed to elevated temperatures.

Polyolefin-based HMA's show good adhesion to low surface-energy materials such as untreated polyolefins or they can be applied to porous materials such as paper, carton or wood where the adhesion is obtained by physical inclusion of the HMA in the porous material. However, these polyolefin-based HMA's typically show low adhesive strength to polar materials such as metals, glass and polar polymeric materials.

EP1186619 discloses the use of polar functionalized monomer having more than 13 carbons C₁₃ in a polyolefin based HMA to improve the adhesion to polar substrates such as polycarbonates and aluminum.

However, HMA containing such functionalized monomer have a limited adhesive strength.

WO2022238352A1 discloses the use of hydroxyl functionalized olefin-based copolymers and terpolymers as HMA with good adhesive strength for a large variety of materials. WO 2005/100501 discloses an adhesive comprising 1) functionalized component and 2) an olefin polymer comprising 50 weight % or more of an alpha-olefin having 3 to 30 carbon atoms, where the olefin polymer has a Dot T-Peel of 1 N or more on Kraft paper, an Mw of 10,000 to 100,000, a g'measured at the Mz of 0.95 or less and a heat of fusion of 1 to 70 J/g; where the functionalized component is selected from the group consisting of functionalized polymers, functionalized oligomers and beta nucleating agents; and where the Gardner color of the adhesive has been heat aged at 180°C for 48 hours as compared to the Gardner color of the unaged composition.

Hydroxyl functionalized olefin-based copolymers and terpolymers are expensive material, and therefore it is difficult to justify their usage in commodity object/material.

Therefore, there is a need for a cheaper HMA with a good adhesive strength usable on polar substrates.

### SUMMARY

This need is achieved by the present invention, an HMA composition comprising a blend of an non-functionalized polyolefin having:
- Number average molecular weight (*M*ₙ) between 4 and 200 kg/mol, preferably between 10 and 150 kg/mol,
- Polydispersity index (*Ð*) ranging from 1.5 to 12, preferably from 2 to 8, more preferably from 2.5 to 5,
- Crystallinity (*X*_{c}) content between 0 and 30 %, preferably 8 and 25 %, more preferably between 10 and 15 %,
- Melting temperature (*T*ₘ) for a semi-crystalline polymer between 40 and 120 °C, preferably between 60 and 110 °C, more preferably between 70 and 100 °C, or no melting temperature for an amorphous polymer,
and comprising at least 80 mol% of a constituent unit represented by the following formula (1), optionally a constituent unit represented by the following formula (2): 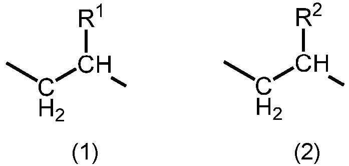 Wherein:
- R¹ is H or CH₃.
- R² is selected from the list comprising: hydrocarbyl group having 0 to 10 carbon atoms, preferentially 2 to 6 and more preferentially 6 when R¹ = H, and preferably 0, 2, 4 or 6 and more preferably 0 or 4 when R¹ = CH₃.
and a functionalized olefin-based copolymer or terpolymer having:
- Number average molecular weight (*M*ₙ) ranging from 2 to 150 kg/mol, preferably from 2 to 9, preferably 10 to 50 kg/mol, preferably 55 to 150, more preferably 4 to 30 kg/mol
- Polydispersity index (*Ð*) from 1.5 to 8, preferably from 2 to 7, preferably from 1.5 to 6, preferably from 3 to 7,
- Crystallinity (*X*_{c}) content below 30 %, preferably below 15 %, more preferably below 10 %,
- Melting temperature (*T*ₘ) for a semi-crystalline polymer between 40 and 120 °C, preferably between 60 and 110 °C, more preferably between 70 and 100 °C, or no melting temperature for an amorphous polymer,
and comprising at least 50 mol%, preferably at least 80 mol% of a constituent unit represented by the following formula (3), optionally a constituent unit represented by the following formula (4), and between 0.1 to 1 mol%, preferably 0.1 to 0.5 mol%, of a constituent unit represented by the following formula (5): 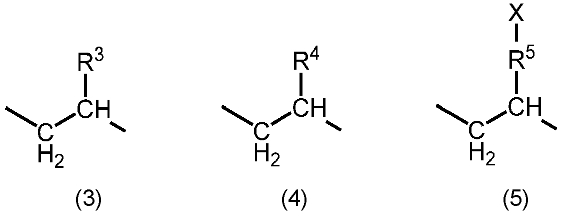 Wherein:
- R³ is H or CH₃.
- R⁴ is selected from the list comprising: hydrocarbyl group having 0 to 10 carbon atoms, preferentially 2 to 6 and more preferentially 6 when R³ = H, and preferably 0, 2, 4 or 6 and more preferably 0 or 4 when R³ = CH₃.
- R⁵ is either:
   - an hydrocarbyl group having 2 to 10 carbon atoms, preferentially 2 to 8, preferentially 4 to 8, more preferentially 4 or 6, when X is:
      ∘ a hydroxyl functionality, or
      ∘ a siloxide functionality containing 3 hydrocarbyl substituents R⁶, R⁷, R⁸, where R⁶, R⁷, R⁸ are identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms, or
   - a hydrocarbyl group having 0 to 10 carbon atoms, preferentially 0 to 6, more preferentially 0 or 4, when X is polar organic group containing at least one carboxylic acid functionality and 0 to 6 carbon atoms.
More in particular the present invention relates to a hot melt adhesive in accordance with claim 1, with preferred embodiments thereof defined in the dependent claims.

In some embodiment, the constituent unit represented by the following formula (5) is selected from the group comprising 3-buten-1-ol, 3-buten-2-ol, 5-hexen-1-ol, 5-hexene-1,2-diol, 7-octen-1-ol, 7-octen-1,2-diol, 5-norbornene-2-methanol, 10-undecen-1-ol, preferably 5-hexen-1-ol.

In some embodiment, the constituent unit represented by the following formula (5) is the polymerization unit from one of the following monomers selected from the group comprising (allyloxy)trimethylsilane, (allyloxy)triethylsilane, (allyloxy)triisopropylsilane, *tert-*butyl(allyloxy)dimethylsilane, (allyloxy)dimethylphenylsilane, (but-3-en-1-yloxy)trimethylsilane, (but-3-en-1-yloxy)triethylsilane, (but-3-en-1-yloxy)triisopropylsilane, *tert*-butyl(but-3-en-1-yloxy)dimethylsilane, (but-3-en-1-yloxy)dimethylphenylsilane, (hex-5-en-1-yloxy)trimethylsilane, (hex-5-en-1-yloxy)triethylsilane, (hex-5-en-1-yloxy)triisopropylsilane, *tert*-butyl(hex-5-en-1-yloxy)dimethylsilane, (hex-5-en-1-yloxy)dimethylphenylsilane, trimethyl(undec-10-en-1-yloxy)silane, triethyl(undec-10-en-1-yloxy)silane, triisopropyl(undec-10-en-1-yloxy)silane, *tert-*butyldimethyl(undec-10-en-1-yloxy)silane, dimethylphenyl(undec-10-en-1-yloxy)silane, preferably (hex-5-en-1-yloxy)trimethylsilane, *tert*-butyl(hex-5-en-1-yloxy)dimethylsilane.

In some embodiment, the constituent unit represented by formula (5) is selected from the group comprising acrylic acid, 3-butenoic acid, 4-pentenoic acid, 5-hexenoic acid, 10-undecenoic acid, 5-norbornene-2-carboxylic acid or 5-norbornene-2-acetic acid, preferably acrylic acid, 3-butenoic acid, 4-pentenoic acid or 5-norbornene-2-carboxylic acid.

In some embodiment, the constituent unit represented by the following formula (5) comprise a hydroxyl group which has been esterified by a polyprotic acid, preferentially, preferably a diprotic or triprotic acid, preferentially citric acid, citric acid anhydride, isocitric acid, tartaric acid, succinic acid, succinic acid anhydride, fumaric acid, malic acid, maleic acid anhydride, itaconoic acid, itaconoic acid anhydride, oxalic acid, trimesic acid, 1,2,4-benzenetricarboxylix-1,2-anhydride, propan-1,2-3-tricarboxylic acid, PBTC acid-2-phosphonobutane-1,2,4-tricarboxylic acid, preferably citric acid, to obtain the following constituent unit according to the formula (6). 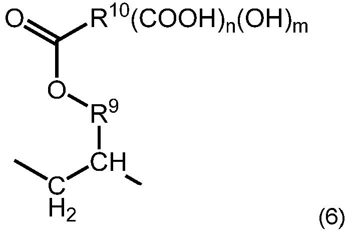 Wherein:
- R⁹ is selected from the list comprising: hydrocarbyl group having 2 to 10, preferably 4 to 10 carbon atoms, more preferentially 4 to 8, even more preferentially 4 or 6,
- R¹⁰ is selected from the list comprising: hydrocarbyl group having 2 to 10 carbon atoms,
- n is 1 to 3 and
- m is 0 to 2.

In some embodiment, the esterification has been performed in solution.

In some embodiment, wherein the esterification has been performed during reactive extrusion process.

In some embodiment, the polymerization has been performed using a solution process.

In some embodiment, the HMA according to the invention is having at least one preferably two, more preferably three, more preferably four, more preferably all of the following binding properties:
- Steel to steel with a Lap Shear Strength shall be above 7.0 MPa,
- Aluminum to aluminum with a Lap Shear Strength shall be above 6.0 MPa
- Wood to wood with a Lap Shear Strength above shall be 4.0 MPa

Another aspect of the invention is an article comprising on at least one of its surface a layer of Hot melt adhesive composition according to the invention.

Article assembly comprising at least two independent article glued together by a Hot melt adhesive composition according to the invention.

Another aspect of the invention is the use of HMA composition according to the invention, in order to glue together metals, glass, polar polymers or metals to glass, metal to polar glass to polar polymers, metals to polyolefins, glass to polyolefins or polar polymers to polyolefins.

### DETAILED DESCRIPTION

A regular HMA composition consists of 3 main components:
- a base polymer, which is the molecular backbone of the adhesive and it is used to provide the inherent strength and chemical resistance as well as the application characteristics,
- tackifiers, which are added to improve initial adhesion by increasing the tack, the stickiness of the surface of the adhesive
- plasticizer, such as for example oils and waxes, which are used to adjust viscosity and set times.

WO2022238352A1 discloses the replacement of the commonly used base polymer by a hydroxyl functionalized olefin-based copolymer or terpolymer, which allows to obtain a powerful HMA.

The present invention preferably relates to a polyolefin-based HMA resin composition comprising a blend of a non-functionalized polyolefin and a hydroxyl, siloxide or carboxylic acid functionalized olefin-based copolymer or terpolymer, preferably the present invention relates to polar substrate HMA.

Surprisingly, the inventors discovered that for substrate combinations consisting of polar substrates (e.g. metal, glass, wood), even with a highly diluted functionalized olefin-based copolymers or terpolymers in a non-functionalized polyolefin resin, the HMA composition retains similar adhesive strength as compared to the functionalized olefin-based copolymer or terpolymer without any dilution.

A polar substrate is defined as a material consisting of molecules having a permanent dipole moment, or a material having a polar surface that consists of atoms differing in electronegativity leading to separation of electric charges. Such materials or material surfaces are hydrophilic. Typical examples of polar materials are metals that form oxide- and/or hydroxide species at their surfaces upon contact with oxygen and/or water, such as aluminum, chromium, iron, steel, copper or for example other hydrophilic materials could be glass, wood, ceramics or for example polar polymers
Indeed, the composition according to the invention remains suitable for gluing polar subtracts as metal to metal together even after a dilution of 1 wt% of hydroxyl functionalized olefin-based copolymers or terpolymers with 99 wt% of the non-functionalized polyolefin.

Accordingly, with such polyolefin-based HMA resin composition according to the invention, inventors considered that for some applications, additional tackifier and/or plasticizer may be optional and not essential to obtain a functional HMA.

According to the invention, the polyolefin-based HMA resin composition comprises a blend of an non-functionalized polyolefin copolymer according to formula (7) of at least one first olefin monomer formula (1) and a second olefin formula (2): 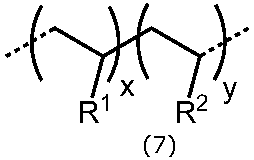 wherein
x is at least 50 mol%, preferably at least 80 mol%,
y is 0 or 100-(x) mol%,
R¹ is H or CH₃,
R² is selected from the list comprising: hydrocarbyl group having 0 to 10 carbon atoms, preferentially 1 to 6 and more preferentially 1 or 6 when R¹ = H, and preferably 0, 2, 4 or 6 and more preferentially 0 or 4 when R¹ = CH₃
and having:
- Number average molecular weight (*M*ₙ) between 4 to 200 kg/mol, preferably between 10 to 150 kg/mol, measured by the method described in the section "Size exclusion chromatography (SEC)" of the Measurement and Methods section of the present disclosure,
- Polydispersity index (*Ð*) ranging from 1.5 to 12, preferably from 2 to 8, more preferably from 2.5 to 5, measured by the method described in the section "Size exclusion chromatography (SEC)" of the Measurement and Methods section of the present disclosure,
- Crystallinity (*X*_{c}) content between 0 and 30 %, preferably 8 and 25 %, more preferably between 10 and 15 %, measured by the method described in the section "Differential scanning calorimetry (DSC)" of the Measurement methods section of the present disclosure,
- Melting temperature (*T*ₘ) for a semi-crystalline polymer between 40 and 120 °C, preferably between 60 and 110 °C, more preferably between 70 and 100 °C, or no melting temperature for an amorphous polymer, measured by the method described in the section "Differential scanning calorimetry (DSC)" of the Measurement methods section of the present disclosure,
And a functionalized olefin-based copolymer or terpolymer (FPO) according to formula (8) of at least one first olefin monomer, optionally a second olefin according and a functionalized C₂ to C₁₂, preferably C₄ to C₁₂, more preferably C₄ to C₁₀ olefin monomer: 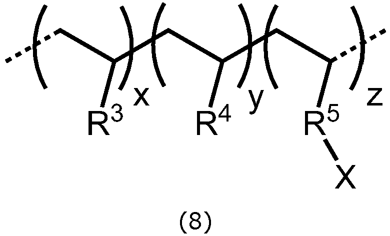 wherein
- z is 0.1 to 1 mol%, preferably 0.1 to 0.5 mol%,
- x is at least 50 mol%, preferably at least 80 mol%,
- y is 0 or 100-(x+z) mol%,
- R³ is H or CH₃,
- R⁴ is selected from the list comprising: hydrocarbyl group having 0 to 10 carbon atoms, preferentially 1 to 6 and more preferentially 1 or 6 when R³ = H, and preferably 0, 2, 4 or 6 and more preferably 0 or 4 when R³ = CH₃,
- R⁶ is either:
   ∘ an hydrocarbyl group having 2 to 10 carbon atoms, preferentially 2 to 8, preferentially 4 to 8, more preferentially 4 or 6, when X is
      ▪ a hydroxyl functionality, or
      ▪ a siloxide functionality containing 3 hydrocarbyl substituents R⁶, R⁷, R⁸, where R⁶, R⁷, R⁸ are identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms, or
   ∘ a hydrocarbyl group having 0 to 10 carbon atoms, preferentially 0 to 6, more preferentially 0 or 4, when X is polar organic group containing at least one carboxylic acid functionality and 0 to 6 carbon atoms.
and having:
- Number average molecular weight (*M*ₙ) ranging from 2 to 150 kg/mol, preferably from 4 to 150 kg/mol, preferably from 2 to 9 kg/mol, preferably 10 to 50 kg/mol, preferably 55 to 150 kg/mol, more preferably from 100 to 150 kg/mol, more preferably 4 to 30 kg/mol, measured by the method described in the section "Size exclusion chromatography (SEC)" of the Measurement methods section of the present disclosure,
- Polydispersity index (*Ð*) from 1.5 to 8, preferably from 2 to 7, preferably from 1.5 to 6, preferably from 3 to 7, more preferably 2, to 6, measured by the method described in the section "Size exclusion chromatography (SEC)" of the Measurement methods section of the present disclosure,
- Crystallinity (*X*_{c}) content below 30%, preferably below 15%, more preferably below 10%, or 0% for fully amorphous polymer, measured by the method described in the section "Differential scanning calorimetry (DSC)" of the Measurement methods section of the present disclosure,
- Melting temperature (*T*ₘ) for a semi-crystalline polymer between 40 and 120 °C, preferably between 60 and 110 °C, more preferably between 70 and 100 °C, or no melting temperature for an amorphous polymer, measured by the method described in the section "Differential scanning calorimetry (DSC)" of the Measurement methods section of the present disclosure.

In some embodiment, the first olefin monomer according to formula (1) is ethylene or propylene, preferably propylene.

Accordingly, the present invention is an HMA composition comprising a base resin made of a blend of functionalized and non-functionalized polymer, and HMA composition is having a number average molecular weight (*M*ₙ) of 4 to 200 kg/mol, wherein the number average molecular weight is measured by size exclusion chromatography (SEC).

Preferably, the HMA composition is having a viscosity between 50 Pa·s and 25,000 Pa·s and/or a melting temperature between 40 °C and 120 °C.

In order to achieve the invention, the base resin comprises:
- Non-functionalized polyolefin according to formula (7) having a crystallinity below 30 %, preferably below 25 %, more preferably below 15%, a number average molecular weight (*M*ₙ) of maximum 200 kg/mol, a melting temperature of maximum 120 °C.
- In a quantity of at least 0.5 wt%, preferably at least 1wt% of the base resin, a functionalized olefin-based copolymer or terpolymer according to formula (8) having a crystallinity below 30 %, preferably below 15%, more preferably below 10%, a number average molecular weight (*M*ₙ) of maximum of 50 kg/mol, and a melting point of maximum of 120 °C.

Preferably, the functionalized olefin-based copolymer or terpolymer forms at least 0.5 wt% of the base resin, more preferably at least 1 wt%, more preferably at least 5 wt%, more preferably at least 10 wt%, even more preferably at least 30 wt%, and/or at most 90 wt%, preferably at most 80 wt% more preferably at most 70 wt% more preferably at most 60 wt% more preferably at most 50 wt% more preferably at most 40 wt%. In some embodiment the range of FPO within the blend could be selected from the following list 0.5 to 90; 0.5 to 80; 0.5 to 70; 0.5 to 60; 0.5 to 50; 0.5 to 40; 0.5 to 30; 0.5 to 20; 0.5 to 10; 0.5 to 5; 1 to 90; 1 to 80; 1 to 70; 1 to 60; 1 to 50; 1 to 40; 1 to 30; 1 to 20; 1 to 10; 1 to 5; 5 to 90; 5 to 80; 5 to 70; 5 to 60; 5 to 50; 5 to 40; 5 to 30; 5 to 20; 5 to 10; 10 to 90; 10 to 80; 10 to 70; 10 to 60; 10 to 50; 10 to 40; 10 to 30; 10 to 20; 20 to 90; 20 to 80; 20 to 70; 20 to 60; 20 to 50; 20 to 40; 20 to 30; 30 to 90; 30 to 80; 30 to 70; 30 to 60; 30 to 50; 30 to 40 wt% of the base resin.

In some embodiment, the HMA resin composition according to the invention is a blend of a non-functionalized polyolefin resulting from the polymerization of a first olefin monomer selected from the list comprising ethylene (C₂) or propylene (C₃), with optionally a second olefin monomer selected from the list comprising C₂ to C₁₂ olefin monomer, and a functionalized olefin-based copolymer or preferably a functionalized olefin-based terpolymer resulting from the polymerization of a first olefin monomer selected from the list comprising ethylene (C₂) or propylene (C₃), with optionally a second olefin monomer selected from the list comprising ethylene or C₂ to C₁₂ olefin monomer and a third - functionalized - olefin monomer, which is selected from the list comprising a hydroxyl, siloxide or a polar organic group containing at least one carboxylic acid functionalized C₂ to C₁₂, preferably C₄ to C₁₂ olefin monomer.

In some embodiment, when the first olefin monomer (Formula 1, 3) is ethylene, preferably the second olefin monomer is propylene, 1-butene, 1-hexene or 1-octene.

In some embodiment, when the first olefin monomer (Formula 1, 3) is propylene, preferably the second olefin monomer is ethylene, 1-butene, 1-hexene or 1-octene.

In some embodiment, the third monomer (Formula 5) is a hydroxyl-functionalized olefin monomer, preferably 3-buten-1-ol, 3-buten-2-ol, 5-hexen-1-ol, 5-hexene-1,2-diol, 7-octen-1-ol, 7-octen-1,2-diol, 5-norbornene-2-methanol, 10-undecen-1-ol, preferably 5-hexen-1-ol.

In some embodiment, the third monomer (Formula 5) is a siloxide-functionalized olefin monomer, preferably (allyloxy)trimethylsilane, (allyloxy)triethylsilane, (allyloxy)triisopropylsilane, *tert*-butyl(allyloxy)dimethylsilane, (allyloxy)dimethylphenylsilane, (but-3-en-1-yloxy)trimethylsilane, (but-3-en-1-yloxy)triethylsilane, (but-3-en-1-yloxy)triisopropylsilane, *tert-*butyl(but-3-en-1-yloxy)dimethylsilane, (but-3-en-1-yloxy)dimethylphenylsilane, (hex-5-en-1-yloxy)trimethylsilane, (hex-5-en-1-yloxy)triethylsilane, (hex-5-en-1-yloxy)triisopropylsilane, *tert-*butyl(hex-5-en-1-yloxy)dimethylsilane, (hex-5-en-1-yloxy)dimethylphenylsilane, trimethyl(undec-10-en-1-yloxy)silane, triethyl(undec-10-en-1-yloxy)silane, triisopropyl(undec-10-en-1-yloxy)silane, *tert*-butyldimethyl(undec-10-en-1-yloxy)silane, dimethylphenyl(undec-10-en-1-yloxy)silane, preferably (hex-5-en-1-yloxy)trimethylsilane, *tert*-butyl(hex-5-en-1-yloxy)dimethylsilane.

In some embodiment, the third monomer (Formula 5) is a polar organic group containing at least one carboxylic acid-functionalized olefin monomer, preferably acrylic acid, 3-butenoic acid, 4-pentenoic acid, 5-hexenoic acid, 10-undecenoic acid, 5-norbornene-2-carboxylic acid or 5-norbornene-2-acetic acid, more preferably acrylic acid, 3-butenoic acid, 4-pentenoic acid or 5-norbornene-2-carboxylic acid.

In some embodiment, the hot melt adhesive resin composition is produced by treatment of a corresponding hydroxyl-functionalized co- or terpolymer with a silylation agent, such as chlorotrimethylsilane, tert-butyl(chloro)dimethylsilane, chlorotriisopropylsilane, wherein the hydroxyl-functionalized co- or terpolymer has been previously produced by a polymerization of one or more olefin monomer and a hydroxyl-functionalized olefin monomer which was prior protected with an aluminum trialkyl, as describe in PCT/EP2021/082511.

In some embodiment, in order to enhance the quantity of functional groups and therefore the binding property of the resin, an esterification of the hydroxyl-functionalized olefin-based copolymer or terpolymer can be performed.

Such esterification can be obtain for example by reacting the hydroxyl-functionalized olefin-based copolymer or terpolymer with an polyprotic acid or the corresponding acid anhydride, preferably a diprotic or triprotic acid for example citric acid, citric acid anhydride, isocitric acid, tartaric acid, succinic acid, succinic acid anhydride, fumaric acid, malic acid, maleic acid anhydride, itaconoic acid, itaconoic acid anhydride, oxalic acid, trimesic acid, 1,2,4-benzenetricarboxylix-1,2-anhydride, propan-1,2-3-tricarboxylic acid, PBTC acid-2-phosphonobutane-1,2,4-tricarboxylic acid, preferably citric acid.

This esterification by a polyprotic acid or acid anhydride can be performed in solution process or during the extrusion process.

The esterification by a polyprotic acid or acid anhydride provides the resin with more polar groups and therefore to be able to bind with better performance different polar materials such as metals, glass, wood or polar polymer materials.

In some embodiment, the non-functionalized polyolefin is selected from the list comprising polyethylene, poly(ethylene-*co*-propylene), poly(ethylene-*co*-1-butene), poly(ethylene-*co*-1-hexene), poly(ethylene-*co*-1-octene), polypropylene, poly(propylene-*co*-ethylene), poly(propylene-*co*-1-butene), poly(propylene-*co*-1-hexene), poly(propylene-*co*-1-octene).

In some embodiment, the hydroxyl functional propylene based terpolymer is selected from the list: poly(propylene-*co*-ethylene-co-5-hexen-1-ol), poly(propylene-*co*-1-hexene-*co*-5-hexen-1-ol), poly(propylene-*co*-1-octene-co-5-hexen-1-ol), poly(propylene-*co*-ethylene-co-7-octen-1-ol), poly(propylene-*co*-1-hexene-co-7-octen-1-ol), poly(propylene-co-1-octene-*co*-7-octen-1-ol),

In some embodiment, the constituent unit represented by the following formula (3) is propylene with a content above 80 mol% of the functionalized olefin-based polymer, the constituent unit represented by the following formula (4) content is between 0 and 19.9 mol% of the functionalized olefin-based polymer and the constituent unit represented by the following formula (5) content is between 0.1 to 1 mol% of the functionalized olefin-based polymer.

In some embodiment, the functionalized olefin-based copolymer or terpolymer is having a number average molecular weight (*M*ₙ) ranging from 2 to 150 kg/mol, preferably from 2 to 9, preferably 10 to 53 kg/mol, preferably 10 to 110, preferably 55 to 150, more preferably 4 to 30 kg/mol.

In some embodiment, the hydroxyl functional olefin-base copolymer or terpolymer is having a number average molecular weight (*M*ₙ) of 10 to 100 kg/mol, preferably 20 to 100, preferably 20 to 55 kg/mol, preferably 30 to 52 kg/mol.

In some embodiment, the siloxide functional olefin-based copolymer or terpolymer is having a number average molecular weight (*M*ₙ) of 10 to 45 kg/mol.

In some embodiment, the polar organic group containing at least one carboxylic acid functionality olefin-based copolymer or terpolymer is having a number average molecular weight (*M*ₙ) of 10 to 50 kg/mol, preferably 20 to 40 kg/mol.

In some embodiment, with such base polymer, inventors considered that for some applications, additional tackifier and or plasticizer are not present. However, is some embodiment they may be added as optional.

In some embodiment, a tackifier may be used up to 70 wt% of the HMA composition. Such tackifier may be selected from a list comprising: rosin acid derivatives and their esters, polyterpene, terpene phenolics, styrenated polyterpene, aliphatic (C5) resin, aliphatic/aromatic (C5/C9) resin, aromatic and pure monomer.

In some embodiment, a plasticizer may be used up to 40 wt% of the HMA composition. Such plasticizer may be selected from a list comprising oils and waxes, for example natural such as carnauba and montan wax, Petroleum-based such as paraffins, microcrystalline wax, synthetic derived from petroleum distillates or residues such as polyethylene, polypropylene, polytetrafluoroethylene, Fischer-Tropsch wax, low molecular weight polyolefin (*M*ₙ <10 000).

In some embodiment, other additives may be used up to 40 wt% for example from 0.01 wt% to 40 wt%, preferably 5 wt% to 35 wt%, more preferably 10 wt% to 30 wt% of the HMA composition. Such additives may be sectioned in a list comprising: antioxidant, inorganic fillers, desiccants, glass, calcium carbonate, talcum, aluminum oxide, aluminum oxide hydroxide adhesion promoters. In some embodiment, aluminum oxide or aluminum oxide hydroxide may be present, preferably in a quantity of 0.01 wt % to 0.7 wt% of the HMA composition.

The HMA composition according to the invention is having at least one, more preferably two, more preferably all of the following binding properties measured according to the ASTM D1002-10(2019) with a Zwick type Z020 tensile tester equipped with a 10 kN load cell:
- Steel to steel with a Lap Shear Strength above 7.0 MPa,
- Aluminum to aluminum with a Lap Shear Strength above 6.0 MPa
- Wood to wood with a Lap Shear Strength above 4.0 MPa

In some applications, in particular related to the adhesion of metal to metal, the HMA composition according to the invention preferably contains the functionalized olefin-based copolymer or terpolymer at a quantity of at least 0.5 wt% of the base resin.

In some embodiment, the HMA according to the invention is produced by mixing the non-functionalized polyolefin and the functionalized olefin-based copolymer or terpolymer in the melt, using for example an extruder, or by dissolving the polymers in a common solvent followed by precipitation the polymer blend in a non-solvent or by flashing off the solvent in a devolatizer unit.

In another embodiment, the HMA according to the invention is produced by a cascade solution polymerization process using two or more reactors in series where the non-functionalized polyolefin is being produced in one reactor and the functionalized olefin-based copolymer or terpolymer is produced in the other reactor, followed by flashing off the solvent in a devolatizer unit. This solution process is preferred as it allow a better blend of the functionalized polymer within the non-functionalized polymer at a molecular level than the melt extrusion process cannot achieve.

The composition comprising a blend of a non-functionalized polyolefin and a hydroxyl, siloxide or carboxylic acid functionalized olefin-based copolymer or terpolymer according to the invention in addition to be used as HMA, it may be also be suitable to be use as:
∘asphalt modifier in order to improve the compatibility between rubber and mineral
∘ encapsulant in photovoltaic panel, or
∘ adhesive for non-polar substrate or
∘ adhesive for polar subtract on non-polar substrate

### Examples

The following examples are not limiting examples and have been realized with the following monomers: ethylene (C₂), propylene (C₃), 1-hexene (C₆), 1-octene (C₈) and 5-hexen-1-ol (C₆OH). However, other monomer could be use in order to achieve the present invention.

### Synthesis of functionalized hot melt adhesive according to the invention

### Synthesis of poly(C₃-co-C₆-co-C₆OH)

The polymerization experiment was carried out using a stainless steel BÜCHI reactor (2 L) filled with pentamethylheptane (PMH) solvent (1 L) using a stirring speed of 600 rpm. Catalyst and comonomer solutions were prepared in a glove box under an inert dry nitrogen atmosphere. The reactor was first heated to 40 °C followed by the addition of TiBA (1.0 M solution in toluene, 2 mL), 1-hexene (neat 10 mL), and triethyl aluminum (TEA)-pacified 5-hexen-1-ol (1.0 M solution in toluene, TEA:5-hexen-1-ol (mol ratio) = 1, 10 mL). The reactor was charged at 40 °C with gaseous propylene (100 g) and the reactor was heated up to the desired polymerization temperature of 130 °C, resulting in a partial propylene pressure of about 15 bar. Once the set temperature was reached, the polymerization reaction was initiated by the injection of the pre-activated catalyst precursor bis((2-oxoyl-3-(dibenzo-1H-pyrrole-1-yl)-5-(methyl)phenyl)-2-phenoxy)-2,4-pentanediylhafnium (IV) dimethyl [CAS 958665-18-4]; other name hafnium [[2',2"'-[(1,3-dimethyl-1,3-propanediyl)bis(oxy-κO)]bis[3-(9H-carbazol-9-yl)-5-methyl[1,1'-biphenyl]-2-olato-κO]](2-)]dimethyl] (Hf-O4, 2 µmol) in MAO (30 wt % solution in toluene, 11.2 mmol). The reaction was stopped by pouring the polymer solution into a container flask containing demineralized water/iPrOH (50 wt%, 1 L) and Irganox 1010 (1.0 M, 2 mmol). The resulting suspension was filtered and dried at 80 °C in a vacuum oven, prior the addition of Irganox 1010 as an antioxidant. The poly(propylene-co-1-hexene-co-5-hexen-1-ol) (25.6 g) was obtained as a powder.

### Synthesis of poly(C₃-co-C₆)

The polymerization experiment was carried out using a stainless steel BÜCHI reactor (2 L) filled with pentamethylheptane (PMH) solvent (1 L) using a stirring speed of 600 rpm. Catalyst and comonomer solutions were prepared in a glove box under an inert dry nitrogen atmosphere.

The reactor was first heated to 40 °C followed by the addition of TiBA (1.0 M solution in toluene, 2 mL) and 1-hexene (neat 30 mL). The reactor was charged at 40 °C with gaseous propylene (100 g) and the reactor was heated up to the desired polymerization temperature of 130 °C resulting in a partial propylene pressure of about 15 bar. Once the set temperature was reached, the polymerization reaction was initiated by the injection of the pre-activated catalyst precursor bis((2-oxoyl-3-(dibenzo-1H-pyrrole-1-yl)-5-(methyl)phenyl)-2-phenoxy)-2,4-pentanediylhafnium (IV) dimethyl [CAS 958665-18-4]; other name hafnium [[2',2"'-[(1,3-dimethyl-1,3-propanediyl)bis(oxy-κO)]bis[3-(9H-carbazol-9-yl)-5-methyl[1,1'-biphenyl]-2-olato-κO]](2-)]dimethyl] (Hf-O4, 1.5 µmol) in MAO (30 wt % solution in toluene, 11.2 mmol). The reaction was stopped by pouring the polymer solution into a container flask containing demineralized water/iPrOH (50 wt%, 1 L) and Irganox 1010 (1.0 M, 2 mmol). The resulting suspension was filtered and dried at 80 °C in a vacuum oven, prior the addition of Irganox 1010 as an antioxidant. The poly(propylene-co-hexene) (29.5 g) was obtained as a powder.

**Table 1. Characteristics of the comparative poly(C₃-co-C₆) copolymer produced according to the abovementioned protocols.**

| **EX** | **Composition** | **C3CxC6OH [mol%]** | **Xc [%]** | **OH group [mol%]** | ***M*ₙ [kg/ mol]** | ***Ð*** | ***T*ₘ [°C]** | **ΔHₘ [J/g]** |
|---|---|---|---|---|---|---|---|---|
| CEX1 | poly(C₃-co-C₆-*co*-C₆OH) | 89.5:10.1:0.4 | 11.9 | 0.4 | 51.2 | 4.0 | 77.3 | 24.6 |
| CEX2 | poly(C₃-co-C₆-*co*-C₆OH) | 90:9.8:0.2 | 14.1 | 0.2 | 85.7 | 4.1 | 72.9 | 29.1 |
| CEX3 | poly(C₃-*co*-C₆) | 91.4:8.6:0 | 8.6 | 0 | 5.8 | 4.0 | 85.0 | 22.9 |
| CEX4 | poly(C₃-*co*-C₆) | 83.0:17.0:0 | 10.4 | 0 | 58.1 | 4.3 | 75.7 | 21.5 |
| CEX5 | poly(C₃-*co*-C₆) | 84.3:15.7:0 | 14.5 | 0 | 149.4 | 2.6 | 86.2 | 30.0 |
| CEX6 | poly(C₃-*co*-C₄) TAFMER XM7070 | n.a. | 17.1 | 0 | 117.4 | 2.3 | 78.4 | 35.4 |
| CEX7 | poly(C₃-*co*-C₂) VISTAMAXX 6102 | n.a. | n.a. | 0 | 117.4 | 2.2 | n.a.* | n.a. |

| | | | | | | | | |
|---|---|---|---|---|---|---|---|---|
| * VISTAMAXX 6102 is amorphous | | | | | | | | |

**Table 2. Characteristics of blends comprising CEX1 (poly(C₃-co-C₆-co-C₆OH)) and CEX3 (poly(C₃-co-C₆)) copolymer and terpolymers with different composition produced according to the abovementioned protocols.**

| **EX** | **Composition** | **Xc [%]** | **OH Group [mol%]** | ***M*ₙ [kg/mol]** | ***Ð* (M_{w}/Mₙ)** | ***T*ₘ [°C]** | **ΔHₘ [J/g]** |
|---|---|---|---|---|---|---|---|
| EX1 | 70% CEX1 - poly(C₃-co-C₆-*co*-C₆OH) | 17.2 | 0.21 | 21.6 | 7.1 | 79.8 | 35.6 |
| | 30% CEX3 - poly(C₃-co-C₆) | | | | | | |
| EX2 | 30% CEX1 - poly(C₃-co-C₆-*co*-C₆OH) | 15.5 | 0.09 | 11.0 | 5.2 | 83.2 | 32.1 |
| | 70% CEX3 - poly(C₃-co-C₆) | | | | | | |

### Preparation of blend comprising 70%wt poly(C₃-co-C₆-co-C₆OH) and 30%wt poly(C₃-co-C₆)

Solid hydroxyl functionalized propylene-based terpolymer poly(C₃-*co*-C₆-*co*-C₆OH)poly(C₃-*co*-C₆)

**Table 3. Characteristics of blends comprising CEX1 (poly(C₃-co-C₆-co-C₆OH)) and CEX4 (poly(C₃-co-C₆)) copolymer and terpolymers with different composition produced according to the abovementioned protocols.**

| **EX** | **Composition** | **Xc [%]** | **OH group [mol%]** | ***M*ₙ [kg/mol]** | ***Ð* (M_{w}/Mₙ)** | ***T*ₘ [°C]** | **ΔHₘ [J/g]** |
|---|---|---|---|---|---|---|---|
| EX3 | 70% CEX1 - poly(C₃-co-C₆-*co*-C₆OH) | 10.3 | 0.3 | 58.8 | 4.1 | 77.1 | 21.3 |
| | 30% CEX4 - poly(C₃-co-C₆) | | | | | | |
| EX4 | 50% CEX1 - poly(C₃-co-C₆-*co*-C₆OH) | 9.7 | 0.2 | 62.3 | 4.0 | 77.3 | 20.1 |
| | 50% CEX4 - poly(C₃-co-C₆) | | | | | | |
| EX5 | 30% CEX1 - poly(C₃-co-C₆-*co*-C₆OH) | 9.7 | 0.1 | 73.9 | 4.1 | 76.2 | 20.1 |
| | 70% CEX4 - poly(C₃-co-C₆) | | | | | | |
| EX6 | 20% CEX1 - poly(C₃-co-C₆-*co*-C₆OH) | 10.3 | 0.1 | 59.6 | 4.2 | 78.0 | 21.3 |
| | 80% CEX4 - poly(C₃-co-C₆) | | | | | | |
| EX7 | 10% CEX1 - poly(C₃-co-C₆-*co*-C₆OH) | 12.0 | 0.1 | 52.5 | 4.3 | 78.9 | 24.8 |
| | 90% CEX4 - poly(C₃-co-C₆) | | | | | | |
| EX8 | 5% CEX1 - poly(C₃-co-C₆-*co*-C₆OH) | 14.1 | 0.05 | 46.5 | 5.0 | 78.4 | 29.2 |
| | 95% CEX4 - poly(C₃-co-C₆) | | | | | | |

**Table 4. Characteristics of blends comprising CEX1 (poly(C₃-co-C₆-co-C₆OH)) and CEX5 (poly(C₃-co-C₆)) copolymer and terpolymers with different composition produced according to the abovementioned protocols.**

| **EX** | **Composition** | **Xc [%]** | **OH group [mol%]** | ***M*ₙ [kg/mol]** | ***Ð* (M_{w}/Mₙ)** | ***T*ₘ [°C]** | **ΔHₘ [J/g]** |
|---|---|---|---|---|---|---|---|
| EX9 | 70% CEX1 - poly(C₃-co-C₆-*co*-C₆OH) | 11.0 | 0.3 | 83.3 | 3.8 | 80.4 | 22.8 |
| | 30% CEX5 - poly(C₃-co-C₆) | | | | | | |
| EX10 | 50% CEX1 - poly(C₃-co-C₆-*co*-C₆OH) | 10.7 | 0.2 | 85.3 | 5.1 | 80.8 | 22.2 |
| | 50% CEX5 - poly(C₃-co-C₆) | | | | | | |
| EX11 | 30% CEX1 - poly(C₃-co-C₆-*co*-C₆OH) | 11.0 | 0.1 | 128.8 | 4.5 | 82.7 | 22.8 |
| | 70% CEX5 - poly(C₃-co-C₆) | | | | | | |
| EX12 | 10% CEX1 - poly(C₃-co-C₆-*co*-C₆OH) | 14.1 | 0.1 | 161.6 | 4.3 | 82.6 | 29.2 |
| | 90% CEX5 - poly(C₃-co-C₆) | | | | | | |
| EX13 | 5% CEX1 - poly(C₃-co-C₆-*co*-C₆OH) | 14.7 | 0.05 | 157.3 | 4.6 | 84.1 | 30.5 |
| | 95% CEX5 - poly(C₃-co-C₆) | | | | | | |
| EX14 | 3% CEX1 - poly(C₃-co-C₆-*co*-C₆OH) | 14.5 | 0.03 | 147.5 | 4.9 | 83.5 | 29.9 |
| | 97% CEX5 - poly(C₃-co-C₆) | | | | | | |
| EX15 | 1% CEX1 - poly(C₃-co-C₆-*co*-C₆OH) | 11.9 | 0.01 | 154.6 | 4.8 | 84.8 | 24.6 |
| | 99% CEX5 - poly(C₃-co-C₆) | | | | | | |

**Table 5. Characteristics of blends comprising CEX2 (poly(C3-co-C₆-co-C₆OH)) and CEX3 (poly(C₃-co-C₆)) copolymer and terpolymers with different composition produced according to the abovementioned protocols.**

| **EX** | **Composition** | **X_{c} [%]** | **OH group mol%** | ***M*ₙ [kg/mol]** | ***Ð* (M_{w}/Mₙ)** | ***T*ₘ [°C]** | **ΔHₘ [J/g ]** |
|---|---|---|---|---|---|---|---|
| EX16 | 70% CEX2 - poly(C₃-co-C₆-*co*-C₆OH) | 11.2 | 0.2 | 19.6 | 18.1 | 76.2 | 23.2 |
| | 30% CEX3 - poly(C₃-co-C₆) | | | | | | |
| EX17 | 30% CEX2 - poly(C₃-co-C₆-*co*-C₆OH) | 14.2 | 0.1 | 11.0 | 14.3 | 80.3 | 29.4 |
| | 70% CEX3 - poly(C₃-co-C₆) | | | | | | |

**Table 6. Characteristics of blends comprising CEX1 (poly(C₃-co-C₆-co-C₆OH)) and CEX6 (TAFMER XM707, poly(C₃-co-C₄)) copolymer and terpolymers with different composition produced according to the abovementioned protocols.**

| **EX** | **Composition** | **X_{c} [%]** | **OH group mol%** | ***M*ₙ [kg/mol]** | ***Ð* (M_{w}/Mₙ)** | ***T*ₘ [°C]** | **ΔHₘ [J/g]** |
|---|---|---|---|---|---|---|---|
| EX18 | 70% CEX1 - POly(C₃-co-C₆-*co*-C₆OH) | 14.8 | 0.21 | 56.2 | 3.7 | 73.5 | 30.6 |
| | 30% CEX6 - TAFMER poly(C₃-co-C₄) | | | | | | |
| EX19 | 50% CEX1 - POly(C₃-co-C₆-*co*-C₆OH) | 14.1 | 0.15 | 73.7 | 3.2 | 72.6 | 29.2 |
| | 50% CEX6 - TAFMER poly(C₃-co-C₄) | | | | | | |
| EX20 | 30% CEX1 - POly(C₃-co-C₆-*co*-C₆OH) | 14.2 | 0.09 | 63.1 | 3.7 | 70.4 | 29.3 |
| | 70% CEX6 - TAFMER poly(C₃-co-C₄) | | | | | | |
| EX21 | 10% CEX1 - POly(C₃-co-C₆-*co*-C₆OH) | 12.8 | 0.03 | 98.9 | 2.7 | 72.1 | 26.4 |
| | 90% CEX6 - TAFMER poly(C₃-co-C₄) | | | | | | |

**Table 7. Characteristics of blends comprising CEX1 (poly(C₃-co-C₆-co-C₆OH)) and CEX7 (VISTAMAXX 6102, poly(C₃-co-C₂)) copolymer and terpolymers with different composition produced according to the abovementioned protocols.**

| **EX** | **Composition** | **X_{c} [%]** | **OH group mol%** | ***M*ₙ [kg/mol]** | ***Ð* (M_{w}/Mₙ)** | **Tₘ [°C]** | **ΔHₘ [J/g]** |
|---|---|---|---|---|---|---|---|
| EX22 | 50% CEX1 - POly(C₃-co-C₆-*co*-C₆OH) | 4.1 | 0.15 | 70.1 | 3.4 | 17.5 | 8.5 |
| | 50% CEX7 - poly(C₃-co-C₂) VISTAMAXX 6102 | | | | | | |

### Measurements and Methods

### Viscosity

Viscosity measurements were performed using a plate-plate (gap distance 1 mm) MCR 720 rheometer (Anton Paar, Graz, Austria). Disc samples (Ø25 mm, 1 mm thickness) were obtained by compression molding. The angular frequency dependent analysis was conducted from 0.01 rad/s to 200 rad/s in temperature 180°C s and amplitude strain of 1 %, as well as a nitrogen atmosphere. Viscosity under medium angular frequency (1 rad/s) was used.

### Size exclusion chromatography (SEC).

SEC measurements were performed at 150 °C on a Polymer Char GPC-IR^{®} built around an Agilent GC oven model 7890, equipped with an autosampler and the Integrated Detector IR4. 1,2-Dichlorobenzene (o-DCB) was used as an eluent at a flow rate of 1 mL/min. The data were processed using Calculations Software GPC One^{®}. The molecular weights were calculated with respect to polyethylene or polystyrene standards.

### Liquid-state ¹H NMR.

¹H NMR and ¹³C NMR spectra were recorded at room temperature or at 80 °C using a Varian Mercury Vx spectrometer operating at Larmor frequencies of 400 MHz and 100.62 MHz for ¹H and ¹³C NMR, respectively. For ¹H NMR experiments, the spectral width was 6402.0 Hz, acquisition time 1.998 s and the number of recorded scans equal to 64. ¹³C NMR spectra were recorded with a spectral width of 24154.6 Hz, an acquisition time of 1.3 s, and 256 scans.

### Differential scanning calorimetry (DSC).

Melting temperatures (*T*ₘ) as well as melting enthalpies (ΔH [J/g]) were measured using a Differential Scanning Calorimeter Q100 from TA Instruments. The measurements were carried out at a heating and cooling rate of 10 °C/min from -40 °C to 240 °C. The melting temperatures were deducted from the second heating and cooling curves.

### Compression-molding experiments.

The film samples, used for the lap shear tests, were prepared via compression-molding using PP ISO settings on a LabEcon 600 high-temperature press (Fontijne Presses, the Netherlands). Namely, the films (25 mm x 12.5 mm x 0.5 mm) of the HMA consisting of a blend of non-functionalized polyolefin and a functionalized propylene-based terpolymer were loaded between the substrates: Steel-Steel or Aluminum-Aluminum substrates with an overlap surface of 12.5 mm. Then, the compression-molding cycle was applied: heating to 180 °C, stabilizing for 3 min with no force applied, 5 min with 100 kN (0.63 MPa) normal force and cooling down to 40 °C with 10 °C/min and 100 kN (0.63 MPa) normal force.

### Lap Shear Strength.

The measurements were performed with a Zwick type Z020 tensile tester equipped with a 10 kN load cell. Before measurements, samples were conditioned for 7 days at room temperature. The tests were performed on specimens (10 cm x 2.5 cm) with surfaces overlapping 12.5 mm. A grip-to-grip separation of 165 mm was used. The samples were pre-stressed to 3 N, then loaded with a constant cross-head speed 100 mm/min. To calculate the lap shear strength, the reported force value divided by the bonding surface (25 mm x 12.5 mm) of the specimens. The reported values are an average of at least 5 measurements of each composition.

### Results

**Table 8. Comparative examples.**

| **EX** | **Lap Shear Strength [MPa]** | | |
|---|---|---|---|
| | **ALUMINIUM / ALUMINIUM** | **STEEL** / **STEEL** | **WOOD / WOOD** |
| CEX1 | 7.7 ± 0.7 | 11.2 ± 1.0 | 6.8 ± 0.8 |
| CEX2 | 6.4 ± 0.6 | 10.9 ± 1.3 | - |
| CEX3 | 1.8 ± 0.5 | 2.0 ± 0.2 | - |
| CEX4 | 1.5 ± 0.7 | 2.1 ± 0.4 | - |
| CEX5 | 2.3 ± 0.5 | 2.2 ± 0.3 | 3.8 ± 0.3 |
| CEX6 | 1.6 ± 0.3 | 1.6 ± 0.4 | - |
| CEX7 | 1.3 ± 0.2 | 0.9 ± 0.3 | - |

| | | | |
|---|---|---|---|
| *AF - aluminum failure | | | |

**Table 9. Lap shear test results of examples**

| **EX** | **Lap Shear Strength [MPa]** | |
|---|---|---|
| | **ALUMINIUM** / **ALUMINIUM** | **STEEL** / **STEEL** |
| EX1 | AF* (>7.0MPa) | 11.3 ± 0.6 |
| EX2 | AF* (>7.0MPa) | 11.8 ± 1.1 |
| EX3 | AF* (>7.0MPa) | 14.2 ± 0.6 |
| EX4 | AF* (>7.0MPa) | 12.1 ± 0.8 |
| EX5 | AF* (>7.0MPa) | 12.2 ± 0.7 |
| EX6 | AF* (>7.0MPa) | 10.8 ± 1.0 |
| EX7 | AF* (>7.0MPa) | 13.0 ± 0.8 |
| EX8 | 7.1 / AF ± 0.2 | 11.7 ± 1.8 |
| EX9 | AF* (>7.0MPa) | 11.5 ± 0.6 |
| EX10 | AF* (>7.0MPa) | 11.5 ± 0.4 |
| EX11 | AF* (>7.0MPa) | 11.8 ± 1.0 |
| EX12 | AF* (>7.0MPa) | 10.8 ± 0.4 |
| EX13 | AF* (>7.0MPa) | 11.8 ± 0.8 |
| EX14 | AF* (>7.0MPa) | 11.1 ± 0.5 |
| EX15 | AF* (>7.0MPa) | 10.1 ± 0.7 |
| EX16 | 6.6 ± 0.5 | 7.5 ± 0.4 |
| EX17 | 6.2 ± 0.5 | 8.5 ± 1.1 |
| EX18 | 6.6 ± 0.2 / AF | 9.5 ± 0.9 |
| EX19 | AF* (>7.0MPa) | 9.1 ± 2.2 |
| EX20 | 6.4 ± 0.4 | 9.3 ± 1.2 |
| EX21 | 6.5 ± 0.2 / AF | 10.4 ± 1.0 |
| EX22 | 6.7 ± 0.1 / AF | 7.8 ± 0.6 |

| | | |
|---|---|---|
| *AF - aluminum failure | | |

Depending of the application, the requirement for the Lap Shear Strength is different:
- Steel to steel with a Lap Shear Strength shall be above 7.0 MPa,
- Aluminum to aluminum with a Lap Shear Strength shall be above 6.0 MPa
- Wood to wood with a Lap Shear Strength above shall be 4.0 MPa

Shown by the Table 9, hot met adhesive according to the invention fulling at least one of the 3 mentioned minimal Lap Shear Strength requirement depending of the final application.

In addition, Table 9, EX15 shows that even 1 wt% of the functionalized terpolymer in the base resin allows to reach more than 90% of the Lap Shear Strength of an HMA made only of pure functionalized terpolymer.

EX3 to EX8 show within the error the same Lap Shear Strength of an HMA made only of pure functionalized terpolymer CE1/CE2.

EX1 and EX2 compare to EX15 and EX16 show that the use of a functionalized polymer with and higher mol% of functionalized group and lower molecular weight is preferred in regard of a lower mol% of functionalized group and higher molecular weight.

## Claims

1. Hot melt adhesive composition having a viscosity between 50 Pa·s and 25 000 Pa·s measured by the method described in the section "Viscosity" and a melting temperature between 40 and 120 °C measured by the method described in the section "Differential scanning calorimetry (DSC)"comprising:
• Base resin having a number average molecular weight of 4 to 200 kg/mol, wherein the number average molecular weight is measured by size exclusion chromatography.
Wherein the base resin comprises a blend of:
∘ an non-functionalized polyolefin comprising at least 50 mol% of a constituent unit represented by the following formula (1), optionally a constituent unit represented by the following formula (2): 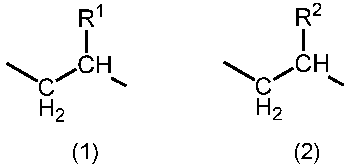 Wherein:
• R¹ is H or CH₃.
• R² is selected from the list comprising: hydrocarbyl group having 0 to 10 carbon atoms, preferentially 2 to 6 when R¹ = H, and preferably 0, 2, 4 or 6 and preferentially 0 or 4 when R¹ = CH₃.
and having:
• Number average molecular weight (*M*ₙ) between 4 and 200 kg/mol, measured by the method described in the section "Size exclusion chromatography (SEC)",
• Polydispersity index (*Ð*) ranging from 1.5 to 12 measured by the method described in the section "Size exclusion chromatography (SEC)"
• Crystallinity (*X*_{c}) content between 0 and 30 % measured by the method described in the section "Differential scanning calorimetry (DSC)"
• Melting temperature (*T*ₘ) for a semi-crystalline polymer between 40 and 120 °C or no melting temperature for an amorphous polymer, measured by the method described in the section "Differential scanning calorimetry (DSC)"
∘ a functionalized olefin-based copolymer or terpolymer having:
• Number average molecular weight (*M*ₙ) ranging from 2 to 150 kg/mol measured by the method described in the section "Size exclusion chromatography (SEC)"
• Polydispersity index (*Ð*) from 1.5 to 8 measured by the method described in the section "Size exclusion chromatography (SEC)"
• Crystallinity (*X*_{c}) content below 30% measured by the method described in the section "Differential scanning calorimetry (DSC)"
• Melting temperature (*T*ₘ) for a semi-crystalline polymer between 40 and 120 °C or no melting temperature for an amorphous polymer, measured by the method described in the section "Differential scanning calorimetry (DSC)"
and comprising at least 50 mol% of a constituent unit represented by the following formula (3), optionally a constituent unit represented by the following formula (4), and between 0.1 to 1 mol% of a constituent unit represented by the following formula (5): 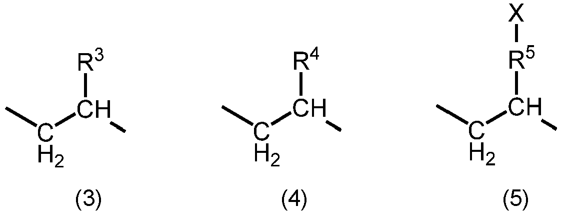 Wherein:
• R³ is H or CH₃.
• R⁴ is selected from the list comprising: hydrocarbyl group having 0 to 10 carbon atoms, preferentially 2 to 6 and more preferentially 6 when R³ = H, and preferably 0, 2, 4 or 6 and preferentially 0 or 4 when R³ = CH₃.
• R⁵ is either:
▪ an hydrocarbyl group having 2 to 10 carbon atoms, when X is:
∘ a hydroxyl functionality, or
∘ a siloxide functionality containing 3 hydrocarbyl substituents R⁶, R⁷, R⁸, where R⁶, R⁷, R⁸ are identical or different and selected from the list comprising a hydrocarbyl group having 1 to 10 carbon atoms, or a combination of 1 and/or 3 and/or 4 carbon atoms, or
▪ an hydrocarbyl group having 0 to 10 carbon atoms when X is polar organic group containing at least one carboxylic acid functionality and 0 to 6 carbon atoms.

2. Hot melt adhesive composition according to the preceding claim, wherein the functionalized olefin-based copolymer or terpolymer is in a quantity of at least 0.5 wt% of the base resin, preferably 1 wt%, preferably at least 5 wt%, more preferably at least 10 wt%, even more preferably at least 30 wt%, and at most 90 wt%, preferably at most 80 wt% more preferably at most 70 wt%, more preferably at most 60 wt% more preferably 50 wt% of the base resin.

3. Hot melt adhesive composition according to one of the preceding claim, wherein the functionalized olefin-based copolymer or terpolymer is a hydroxyl functional olefin-based copolymer or terpolymer selected from the list: poly(propylene-*co*-ethylene-co-5-hexen-1-ol), poly(propylene-co-1-hexene-*co*-5-hexen-1-ol), poly(propylene-*co*-1-octene-co-5-hexen-1-ol), poly(propylene-*co*-ethylene-*co*-7-octen-1-ol), poly(propylene-*co*-1-hexene-*co*-7-octen-1-ol), poly(propylene-*co*-1-octene-co-7-octen-1-ol).

4. Hot melt adhesive composition according to claim 1 or 2, wherein the functionalized olefin-based copolymer or terpolymer is a siloxide functional olefin-based copolymer or terpolymer selected from the list: poly(propylene-*co*-ethylene-*co*-(hex-5-en-1-yloxy)trimethylsilane), poly(propylene-*co*-1-butene-co-(hex-5-en-1-yloxy)trimethylsilane), poly(propylene-co-1-hexene-*co*-(hex-5-en-1-yloxy)trimethylsilane), poly(propylene-*co*-1-octene-co-(hex-5-en-1-yloxy)trimethylsilane), poly(propylene-*co*-ethylene-*co*-*tert*-butyl(hex-5-en-1-yloxy)dimethylsilane), poly(propylene-*co*-1-butene-*co*-*tert*-butyl(hex-5-en-1-yloxy)dimethylsilane), poly(propylene-c*o*-1-hexene-*co*-*tert*-butyl(hex-5-en-1-yloxy)dimethylsilane), poly(propylene-*co*-1-octene-*co*-*tert*-butyl(hex-5-en-1-yloxy)dimethylsilane).

5. Hot melt adhesive composition according to claim 1 or 2, wherein the functionalized olefin-based copolymer or terpolymer is a polar organic group containing at least one carboxylic acid functional olefin-based copolymer or terpolymer selected from the list: poly(propylene-*co-*ethylene-*co*-4-pentenoic acid), poly(propylene-*co*-1-butene-co-4-pentenoic acid), poly(propylene-*co*-1-hexene-co-4-pentenoic acid), poly(propylene-*co*-1-octene-*co*-4-pentenoic acid), poly(propylene-co-ethylene-*co*-5-hexenoic acid), poly(propylene-*co*-1-butene-*co*-5-hexenoic acid), poly(propylene-*co*-1-hexene-*co*-5-hexenoic acid), poly(propylene-co-1-octene-*co*-5-hexenoic acid), poly(propylene-*co*-ethylene-*co*-4-(5-hexen-1-yloxy)-4-oxobutanoic acid), poly(propylene-*co*-1-butene-co-4-(5-hexen-1-yloxy)-4-oxobutanoic acid), poly(propylene-*co*-1-hexene-*co*-4-(5-hexen-1-yloxy)-4-oxobutanoic acid), poly(propylene-*co*-1-octene-*co*-4- (5-hexen-1-yloxy)-4-oxobutanoic acid), poly(propylene-*co-*ethylene-*co*-2-(2-(hex-5-en-1-yloxy)-2-oxoethyl)-2-hydroxysuccinic acid), poly(propylene-*co-*1-butene-*co*-2-(2-(hex-5-en-1-yloxy)-2-oxoethyl)-2-hydroxysuccinic acid), poly(propylene-*co-*1-hexene-*co*-2-(2-(hex-5-en-1-yloxy)-2-oxoethyl)-2-hydroxysuccinic acid), poly(propylene-*co-*1-octene-*co*-2-(2-(hex-5-en-1-yloxy)-2-oxoethyl)-2-hydroxysuccinic acid).

6. Hot melt adhesive composition according to the preceding claim, wherein the non-functionalized olefin polymer is selected from the list comprising: polyethylene, poly(ethylene-*co*-propylene), poly(ethylene-*co*-1-butene), poly(ethylene-*co*-1-hexene), poly(ethylene-*co*-1-octene), polypropylene, poly(propylene-*co*-ethylene), poly(propylene-*co*-1-butene), poly(propylene-co-1-hexene), poly(propylene-*co*-1-octene).

7. Hot melt adhesive composition according to the preceding claim wherein further comprises tackifier, plasticizer, antioxidant, inorganic fillers, desiccants aluminum oxide hydroxide and/or adhesion promoters

8. Hot melt adhesive composition according to the preceding claim wherein the tackifier up to 70 wt% of the hot melt adhesive.

9. Hot melt adhesive composition according to claims 1 to 7 wherein it does not contain tackifier and/or plasticizer.

10. Hot melt adhesive composition according to one of the preceding claims having at least one preferably two, more all of the following binding properties measured according to the ASTM D1002-10(2019) with a Zwick type Z020 tensile tester equipped with a 10 kN load cell:
∘ Steel to steel with a Lap Shear Strength above 7.0 MPa,
∘ Aluminum to aluminum with a Lap Shear Strength above 6.0 MPa
∘ Wood to wood with a Lap Shear Strength above 4.0 MPa

11. Article comprising on at least one of its surface a layer of Hot melt adhesive composition according to one of the claims 1 to 11.

12. Article assembly comprising at least two independent articles glued together by a hot melt adhesive composition according to one of the claims 1 to 11.

13. Use of a hot melt adhesive composition according to one of the claims 1 to 11 as
a. asphalt modifier in order to improve the compatibility between bitumen and mineral,
b. encapsulant in photovoltaic panel,
c. adhesive for non-polar substrate, in particular when the non-polar substrate should not be molten or cannot melt.
d. adhesive for polar subtract on non-polar substrate.

## Patentansprüche

1. Heißschmelzklebstoffzusammensetzung, die eine Viskosität zwischen 50 Pa·s und 25 000 Pa·s, gemessen nach dem im Abschnitt "Viskosität" beschriebenen Verfahren, und eine Schmelztemperatur zwischen 40 und 120 °C, gemessen nach dem im Abschnitt "dynamische Differenzkalorimetrie (DSC)" beschriebenen Verfahren, aufweist, umfassend:
- Basisharz, das ein zahlenmittleres Molekulargewicht von 4 bis 200 kg/mol aufweist, wobei das zahlenmittlere Molekulargewicht durch Größenausschlusschromatographie gemessen wird.
wobei das Basisharz eine Mischung aus Folgendem umfasst:
- einem nicht funktionalisierten Polyolefin, umfassend mindestens 50 Mol-% einer Bestandteilseinheit, die durch die folgende Formel (1) dargestellt wird, optional einer Bestandteilseinheit, die durch die folgende Formel (2) dargestellt wird: 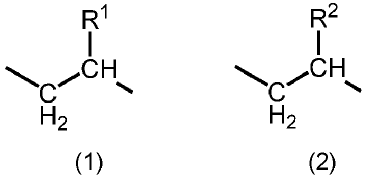 wobei:
- R¹ H oder CH₃ ist.
- R² ausgewählt ist aus der Liste, umfassend: Hydrocarbylgruppe mit 0 bis 10 Kohlenstoffatomen, bevorzugt 2 bis 6, wenn R¹ = H, und bevorzugt 0, 2, 4 oder 6 und bevorzugterweise 0 oder 4, wenn R¹ = CH₃.
und aufweisend:
- zahlenmittleres Molekulargewicht (*M*ₙ) zwischen 4 und 200 kg/mol, gemessen nach dem im Abschnitt "Größenausschlusschromatographie (SEC)" beschriebenen Verfahren,
- Polydispersitätsindex (D) im Bereich von 1,5 bis 12, gemessen nach dem im Abschnitt "Größenausschlusschromatographie (SEC)" beschriebenen Verfahren
- Kristallinitätsgehalt (*X*_{c}) zwischen 0 und 30 %, gemessen nach dem im Abschnitt "dynamische Differenzkalorimetrie (DSC)" beschriebenen Verfahren
- Schmelztemperatur (*Tₘ*) für ein halbkristallines Polymer zwischen 40 und 120 °C oder keine Schmelztemperatur für ein amorphes Polymer, gemessen nach dem im Abschnitt "dynamische Differenzkalorimetrie (DSC)" beschriebenen Verfahren
- ein funktionalisiertes Copolymer oder Terpolymer auf Olefinbasis, das Folgendes aufweist:
- zahlenmittleres Molekulargewicht (*M*ₙ) im Bereich von 2 bis 150 kg/mol, gemessen nach dem im Abschnitt "Größenausschlusschromatographie (SEC)" beschriebenen Verfahren
- Polydispersitätsindex (D) von 1,5 bis 8, gemessen nach dem im Abschnitt "Größenausschlusschromatographie (SEC)" beschriebenen Verfahren
- Kristallinitätsgehalt (*X*_{c}) unter 30 %, gemessen nach dem im Abschnitt "dynamische Differenzkalorimetrie (DSC)" beschriebenen Verfahren
- Schmelztemperatur (*Tₘ*) für ein halbkristallines Polymer zwischen 40 und 120 °C oder keine Schmelztemperatur für ein amorphes Polymer, gemessen nach dem im Abschnitt "dynamische Differenzkalorimetrie (DSC)" beschriebenen Verfahren
und umfassend mindestens 50 Mol-% einer Bestandteilseinheit, die durch die folgende Formel (3) dargestellt wird, optional einer Bestandteilseinheit, die durch die folgende Formel (4) dargestellt wird, und zwischen 0,1 bis 1 Mol-% einer Bestandteilseinheit, die durch die folgende Formel (5) dargestellt wird: 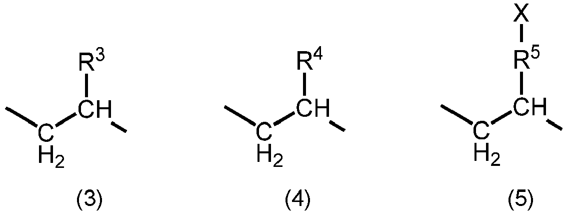 wobei:
- R³ H oder CH₃ ist.
- R⁴ ausgewählt ist aus der Liste, umfassend: Hydrocarbylgruppe mit 0 bis 10 Kohlenstoffatomen, bevorzugt 2 bis 6 und bevorzugter 6, wenn R³ = H, und bevorzugt 0, 2, 4 oder 6 und bevorzugterweise 0 oder 4, wenn R³ = CH₃.
- R⁵ entweder:
- eine Hydrocarbylgruppe mit 2 bis 10 Kohlenstoffatomen ist, wenn X Folgendes ist:
- eine Hydroxylfunktionalität oder
- eine Siloxidfunktionalität, die 3 Hydrocarbylsubstituenten R⁶, R⁷, R⁸ enthält, wobei R⁶, R⁷, R⁸ identisch oder verschieden sind und ausgewählt sind aus der Liste umfassend eine Hydrocarbylgruppe mit 1 bis 10 Kohlenstoffatomen oder eine Kombination von 1 und/oder 3 und/oder 4 Kohlenstoffatomen, oder
- eine Hydrocarbylgruppe mit 0 bis 10 Kohlenstoffatomen, wenn X eine polare organische Gruppe ist, die mindestens eine Carbonsäurefunktionalität und 0 bis 6 Kohlenstoffatome enthält.

2. Heißschmelzklebstoffzusammensetzung nach dem vorstehenden Anspruch, wobei das funktionalisierte Copolymer oder Terpolymer auf Olefinbasis in einer Menge von mindestens 0,5 Gew.-% des Basisharzes, bevorzugt 1 Gew.-%, bevorzugt mindestens 5 Gew.-%, bevorzugter mindestens 10 Gew.-%, noch bevorzugter mindestens 30 Gew.-% und höchstens 90 Gew.-%, bevorzugt höchstens 80 Gew.-%, bevorzugter höchstens 70 Gew.-%, bevorzugter höchstens 60 Gew.-%, bevorzugter 50 Gew.-% des Basisharzes vorliegt.

3. Heißschmelzklebstoffzusammensetzung nach einem des vorstehenden Anspruchs, wobei das funktionalisierte Copolymer oder Terpolymer auf Olefinbasis ein hydroxylfunktionelles Copolymer oder Terpolymer auf Olefinbasis ist, ausgewählt aus der Liste: Poly(propylen-co-ethylen-co-5-hexen-1-ol), Poly(propylen-co-1-hexen-co-5-hexen-1-ol), Poly(propylen-co-1-octen-co-5-hexen-1-ol), Poly(propylen-co-ethylen-co-7-octen-1-ol), Poly(propylen-co-1-hexen-co-7-octen-1-ol), Poly(propylen-co-1-octen-co-7-octen-1-ol).

4. Heißschmelzklebstoffzusammensetzung nach Anspruch 1 oder 2, wobei das funktionalisierte Copolymer oder Terpolymer auf Olefinbasis ein siloxidfunktionelles Copolymer oder Terpolymer auf Olefinbasis ist, ausgewählt aus der Liste: Poly(propylen-co-ethylen-co-(hex-5-en-1-yloxy)trimethylsilan), Poly(propylen-co-1-buten-co-(hex-5-en-1-yloxy)trimethylsilan), Poly(propylen-co-1-hexen-co-(hex-5-en-1-yloxy)trimethylsilan), Poly(propylen-co-1-octen-co-(hex-5-en-1-yloxy)trimethylsilan), Poly(propylen-co-ethylen-co-tert-butyl(hex-5-en-1-yloxy)dimethylsilan), Poly(propylen-co-1-buten-co-tert-butyl(hex-5-en-1-yloxy)dimethylsilan), Poly(propylen-co-1-hexen-co-tert-butyl(hex-5-en-1-yloxy)dimethylsilan), Poly(propylen-co-1-octen-co-tert-butyl(hex-5-en-1-yloxy)dimethylsilan).

5. Heißschmelzklebstoffzusammensetzung nach Anspruch 1 oder 2, wobei das funktionalisierte Copolymer oder Terpolymer auf Olefinbasis eine polare organische Gruppe ist, die mindestens ein carboxylsäurefunktionelles Copolymer oder Terpolymer auf Olefinbasis enthält, ausgewählt aus der Liste: Poly(propylen-co-ethylen-co-4-pentensäure), Poly(propylen-co-1-buten-co-4-pentensäure), Poly(propylen-co-1-hexen-co-4-pentensäure), Poly(propylen-co-1-octen-co-4-pentensäure), Poly(propylen-co-ethylen-co-5-hexensäure), Poly(propylen-co-1-buten-co-5-hexensäure), Poly(propylen-co-1-hexen-co-5-hexensäure), Poly(propylen-co-1-octen-co-5-hexensäure), Poly(propylen-co-ethylen-co-4-(5-hexen-1-yloxy)-4-oxobutansäure), Poly(propylen-co-1-buten-co-4-(5-hexen-1-yloxy)-4-oxobutansäure), Poly(propylen-co-1-hexen-co-4-(5-hexen-1-yloxy)-4-oxobutansäure), Poly(propylen-co-1-octen-co-4-(5-hexen-1-yloxy)-4-oxobutansäure), Poly(propylen-co-ethylen-co-2-(2-(hex-5-en-1-yloxy)-2-oxoethyl)-2-hydroxybernsteinsäure), Poly(propylen-co-1-buten-co-2-(2-(hex-5-en-1-yloxy)-2-oxoethyl)-2-hydroxybernsteinsäure), Poly(propylen-co-1-hexen-co-2-(2-(hex-5-en-1-yloxy)-2-oxoethyl)-2-hydroxybernsteinsäure), Poly(propylen-co-1-octen-co-2-(2-(hex-5-en-1-yloxy)-2-oxoethyl)-2-hydroxybernsteinsäure).

6. Heißschmelzklebstoffzusammensetzung nach dem vorstehenden Anspruch, wobei das nicht funktionalisierte Olefinpolymer ausgewählt ist aus der Liste, umfassend: Polyethylen, Poly(ethylen-co-propylen), Poly(ethylen-co-1-buten), Poly(ethylen-co-1-hexen), Poly(ethylen-co-1-octen), Polypropylen, Poly(propylen-co-ethylen), Poly(propylen-co-1-buten), Poly(propylen-co-1-hexen), Poly(propylen-co-1-octen).

7. Heißschmelzklebstoffzusammensetzung nach dem vorstehenden Anspruch, wobei sie weiter Klebrigmacher, Weichmacher, Antioxidationsmittel, anorganische Füllstoffe, trocknungsförderndes Aluminiumoxidhydroxid und/oder Haftvermittler umfasst.

8. Heißschmelzklebstoffzusammensetzung nach dem vorstehenden Anspruch, wobei der Klebrigmacher bis zu 70 Gew.-% des Heißschmelzklebstoffs ausmacht.

9. Heißschmelzklebstoffzusammensetzung nach den Ansprüchen 1 bis 7, wobei sie keinen Klebrigmacher und/oder Weichmacher enthält.

10. Heißschmelzklebstoffzusammensetzung nach einem der vorstehenden Ansprüche, die mindestens eine, bevorzugt zwei, bevorzugter alle der folgenden Bindungseigenschaften aufweist, gemessen nach ASTM D1002-10(2019) mit einer Zwick-Zugprüfmaschine vom Typ Z020, die mit einer 10 kN-Wägezelle ausgestattet ist:
- Stahl zu Stahl mit einer Zugscherfestigkeit über 7,0 MPa,
- Aluminium zu Aluminium mit einer Zugscherfestigkeit von über 6,0 MPa
- Holz zu Holz mit einer Zugscherfestigkeit über 4,0 MPa

11. Artikel, umfassend auf mindestens einer seiner Oberflächen eine Schicht der Heißschmelzklebstoffzusammensetzung nach einem der Ansprüche 1 bis 11.

12. Artikelanordnung, die mindestens zwei unabhängige Artikel umfasst, die durch eine Heißschmelzklebstoffzusammensetzung nach einem der Ansprüche 1 bis 11 miteinander verklebt sind.

13. Verwendung einer Heißschmelzklebstoffzusammensetzung nach einem der Ansprüche 1 bis 11 als
a) Asphalt-Modifikator zur Verbesserung der Kompatibilität zwischen Bitumen und Mineral,
b) Verkapselungsmittel im Photovoltaikmodul,
c) Klebstoff für ein unpolares Substrat, insbesondere wenn das unpolare Substrat nicht geschmolzen sein sollte oder nicht schmelzen kann.
d) Klebstoff zum polaren Subtrahieren auf unpolaren Substraten.

## Revendications

1. Composition adhésive thermofusible présentant une viscosité comprise entre 50 Pa·s et 25 000 Pa·s mesurée par le procédé décrit dans la section « Viscosité » et une température de fusion comprise entre 40 et 120 °C mesurée par le procédé décrit dans la section « Calorimétrie différentielle à balayage (DSC) » comprenant :
- une résine de base présentant un poids moléculaire moyen en nombre de 4 à 200 kg/mol, dans laquelle le poids moléculaire moyen en nombre est mesuré par chromatographie d'exclusion stérique,
dans laquelle la résine de base comprend un mélange de :
- une polyoléfine non fonctionnalisée comprenant au moins 50 % en moles d'une unité constitutive représentée par la formule suivante (1), éventuellement une unité constitutive représentée par la formule suivante (2) : 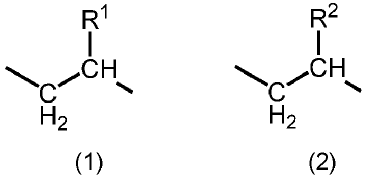 dans laquelle :
- R¹ est H ou CH₃,
- R² est choisi dans la liste comprenant : un groupe hydrocarbyle présentant 0 à 10 atomes de carbone, préférentiellement 2 à 6 lorsque R¹ = H, et de préférence 0, 2, 4 ou 6 et préférentiellement 0 ou 4 lorsque R¹ = CH₃,
et présentant :
- une masse moléculaire moyenne en nombre (*M*ₙ) comprise entre 4 et 200 kg/mol, mesurée par le procédé décrit dans la section « Chromatographie d'exclusion stérique (SEC) »,
- un indice de polydispersité (D) dans la plage de 1,5 à 12 mesuré par le procédé décrit dans la section « Chromatographie d'exclusion stérique (SEC) »,
- une teneur en cristallinité (*X*_{c}) comprise entre 0 et 30 % mesurée par le procédé décrit dans la section « Calorimétrie différentielle à balayage (DSC) »,
- une **température** de fusion (*Tₘ*) pour un polymère semi-cristallin entre 40 et 120 °C ou aucune température de fusion pour un polymère amorphe, mesurée par le procédé décrit dans la section « Calorimétrie différentielle à balayage (DSC) »,
- un copolymère ou terpolymère à base d'oléfine fonctionnalisé présentant :
- une masse moléculaire moyenne en nombre (*M*ₙ) dans la plage de 2 à 150 kg/mol mesurée par le procédé décrit dans la section « Chromatographie d'exclusion stérique (SEC) »,
- un indice de polydispersité (D) de 1,5 à 8 mesuré par le procédé décrit dans la section « Chromatographie d'exclusion stérique (SEC) »,
- une teneur en cristallinité (*X_{c}*) inférieure à 30 % mesurée par le procédé décrit dans la section « Calorimétrie différentielle à balayage (DSC) »,
- une température de fusion (*Tₘ*) pour un polymère semi-cristallin entre 40 et 120 °C ou aucune température de fusion pour un polymère amorphe, mesurée par le procédé décrit dans la section « Calorimétrie différentielle à balayage (DSC) »,
et comprenant au moins 50 % en moles d'une unité constitutive représentée par la formule suivante (3), éventuellement une unité constitutive représentée par la formule suivante (4), et entre 0,1 et 1 % en moles d'une unité constitutive représentée par la formule suivante (5) : 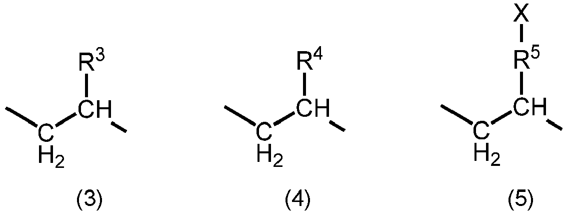 dans laquelle :
- R³ est H ou CH₃,
- R⁴ est choisi dans la liste comprenant : un groupe hydrocarbyle présentant 0 à 10 atomes de carbone, préférentiellement 2 à 6 et plus préférentiellement 6 lorsque R³ = H, et de préférence 0, 2, 4 ou 6 et préférentiellement 0 ou 4 lorsque R³ = CH₃,
- R⁵ est soit :
- un groupe hydrocarbyle présentant 2 à 10 atomes de carbone, lorsque X est :
- une fonctionnalité hydroxyle, ou
- une fonctionnalité siloxyde contenant 3 substituants hydrocarbyle R⁶, R⁷, R⁸, où R⁶, R⁷, R⁸ sont identiques ou différents et choisis dans la liste comprenant un groupe hydrocarbyle présentant 1 à 10 atomes de carbone, ou une combinaison de 1 et/ou 3 et/ou 4 atomes de carbone, ou
- un groupe hydrocarbyle présentant 0 à 10 atomes de carbone lorsque X est un groupe organique polaire contenant au moins une fonctionnalité acide carboxylique et 0 à 6 atomes de carbone.

2. Composition adhésive thermofusible selon la revendication précédente, dans laquelle le copolymère ou terpolymère à base d'oléfine fonctionnalisé est présent en une quantité d'au moins 0,5 % en poids de la résine de base, de préférence 1 % en poids, de préférence au moins 5 % en poids, plus préférentiellement au moins 10 % en poids, encore plus préférentiellement au moins 30 % en poids, et au plus 90 % en poids, de préférence au plus 80 % en poids, plus préférentiellement au plus 70 % en poids, plus préférentiellement au plus 60 % en poids, plus préférentiellement 50 % en poids de la résine de base.

3. Composition adhésive thermofusible selon l'une des revendications précédentes, dans laquelle le copolymère ou terpolymère à base d'oléfine fonctionnalisé est un copolymère ou terpolymère à base d'oléfine à fonction hydroxyle choisi dans la liste : poly(propylène-co-éthylène-co-5-hexén-1-ol), poly(propylène-co-1-hexène-co-5-hexén-1-ol), poly(propylène-co-1-octène-co-5-hexén-1-ol), poly(propylène-co-éthylène-co-7-octén-1-ol), poly(propylène-co-1-hexène-co-7-octén-1-ol), poly(propylène-co-1-octène-co-7-octén-1-ol).

4. Composition adhésive thermofusible selon la revendication 1 ou 2, dans laquelle le copolymère ou terpolymère à base d'oléfine fonctionnalisé est un copolymère ou terpolymère à base d'oléfine à fonction siloxyde choisi dans la liste : poly(propylène-co-éthylène-co-(hex-5-én-1-yloxy)triméthylsilane), poly(propylène-co-1-butène-co-(hex-5-én-1-yloxy)triméthylsilane), poly(propylène-co-1-hexène-co-(hex-5-én-1-yloxy)triméthylsilane), poly(propylène-co-1-octène-co-(hex-5-én-1-yloxy)triméthylsilane), poly(propylène-co-éthylène-co-tert-butyl(hex-5-én-1-yloxy)diméthylsilane), poly(propylène-co-1-butène-co-tert-butyl(hex-5-én-1-yloxy)diméthylsilane), poly(propylène-co-1-hexène-co-tert-butyl(hex-5-én-1-yloxy)diméthylsilane), poly(propylène-co-1-octène-co-tert-butyl(hex-5-én-1-yloxy)diméthylsilane).

5. Composition adhésive thermofusible selon la revendication 1 ou 2, dans laquelle le copolymère ou terpolymère à base d'oléfine fonctionnalisé est un groupe organique polaire contenant au moins un copolymère ou terpolymère à base d'oléfine à fonction acide carboxylique choisi dans la liste : poly(propylène-co-éthylène-co-4-acide penténoïque), poly(propylène-co-1-butène-co-4-acide penténoïque), poly(propylène-co-1-hexène-co-4-acide penténoïque), poly(propylène-co-1-octène-co-4-acide penténoïque), poly(propylène-co-éthylène-co-5-acide hexénoïque), poly(propylène-co-1-butène-co-5-acide hexénoïque), poly(propylène-co-1-hexène-co-5-acide hexénoïque), poly(propylène-co-1-octène-co-5-acide hexénoïque). poly(propylène-co-éthylène-co-4-(5-hexén-1-yloxy)-4-acide oxobutanoïque), poly(propylène-co-1-butène-co-4-(5-hexén-1-yloxy)-4-acide oxobutanoïque), poly(propylène-co-1-hexène-co-4-(5-hexén-1-yloxy)-4-acide oxobutanoïque), poly(propylène-co-1-octène-co-4-(5-hexén-1-yloxy)-4-acide oxobutanoïque), poly(propylène-co-éthylène-co-2-(2-(hex-5-én-1-yloxy)-2-oxoéthyl)-2-acide hydroxysuccinique), poly(propylène-co-1-butène-co-2-(2-(hex-5-én-1-yloxy)-2-oxoéthyl)-2-acide hydroxysuccinique), poly(propylène-co-1-hexène-co-2-(2-(hex-5-én-1-yloxy)-2-oxoéthyl)-2-acide hydroxysuccinique), poly(propylène-co-1-octène-co-2-(2-(hex-5-én-1-yloxy)-2-oxoéthyl)-2-acide hydroxysuccinique).

6. Composition adhésive thermofusible selon la revendication précédente, dans laquelle le polymère oléfinique non fonctionnalisé est choisi dans la liste comprenant : polyéthylène, poly(éthylène-co-propylène), poly(éthylène-co-1-butène), poly(éthylène-co-1-hexène), poly(éthylène-co-1-octène), polypropylène, poly(propylène-co-éthylène), poly(propylène-co-1-butène), poly(propylène-co-1-hexène), poly(propylène-co-1-octène).

7. Composition adhésive thermofusible selon la revendication précédente, comprenant en outre un agent collant, un plastifiant, un antioxydant, des charges inorganiques, des dessiccants, de l'hydroxyde d'oxyde d'aluminium et/ou des promoteurs d'adhérence.

8. Composition adhésive thermofusible selon la revendication précédente, dans laquelle l'agent collant représente jusqu'à 70 % en poids de l'adhésif thermofusible.

9. Composition adhésive thermofusible selon les revendications 1 à 7, dans laquelle elle ne contient pas d'agent collant et/ou de plastifiant.

10. Composition adhésive thermofusible selon l'une des revendications précédentes, présentant au moins une, de préférence deux, plus préférentiellement toutes les propriétés de liaison suivantes mesurées selon la norme ASTM D1002-10(2019) avec un testeur de traction Zwick type Z020 équipé d'une cellule de charge de 10 kN :
- acier sur acier avec une résistance au cisaillement par recouvrement supérieure à 7,0 MPa,
- aluminium sur aluminium avec une résistance au cisaillement par recouvrement supérieure à 6,0 MPa,
- bois sur bois avec une résistance au cisaillement par recouvrement supérieure à 4,0 MPa.

11. Article comprenant sur au moins une de ses surfaces une couche de composition adhésive thermofusible selon l'une des revendications 1 à 11.

12. Ensemble d'articles comprenant au moins deux articles indépendants collés ensemble par une composition adhésive thermofusible selon l'une des revendications 1 à 11.

13. Utilisation d'une composition adhésive thermofusible selon l'une des revendications 1 à 11 comme
a) modificateur d'asphalte afin d'améliorer la compatibilité entre le bitume et le minéral,
b) encapsulant dans un panneau photovoltaïque,
c) adhésif pour substrat non polaire, en particulier lorsque le substrat non polaire ne doit pas être fondu ou ne peut pas fondre,
d) adhésif pour substrat polaire sur substrat non polaire.
